Europäisches Patentamt

European Patent Office

Office européen des brevets

(11) Veröffentlichungsnummer: **0 325 264**
**A2**

## (12) EUROPÄISCHE PATENTANMELDUNG

(21) Anmeldenummer: **89100924.3**

(22) Anmeldetag: **20.01.89**

(51) Int. Cl.⁴: **B23D 79/00**

(30) Priorität: **21.01.88 DE 3801641**

(43) Veröffentlichungstag der Anmeldung:
**26.07.89 Patentblatt 89/30**

(84) Benannte Vertragsstaaten:
**AT BE CH DE ES FR GB IT LI NL SE**

(71) Anmelder: **Eisenbach, Bernhard**
**Taunusstrasse 24**
**D-6259 Brechen(DE)**

(72) Erfinder: **Eisenbach, Bernhard**
**Taunusstrasse 24**
**D-6259 Brechen(DE)**

(74) Vertreter: **Katscher, Helmut, Dipl.-Ing.**
**Bismarckstrasse 29**
**D-6100 Darmstadt(DE)**

(54) **Eckenputzmaschine für Fenster- oder Türrahmen.**

(57) Eine Eckenputzmaschine dient zum Entfernen der Schweißraupen an den Schweißstellen an den Ecken (1a, 1b) von Fenster- oder Türrahmen (1), die aus Profilstäben stumpfgeschweißt sind. An einer horizontalen, schrägen oder vertikalen Förderbahn (2) für die zu bearbeitenden Rahmen (1) sind zwei Gruppen von Bearbeitungseinheiten (6, 7 bzw. 13, 14) angeordnet, von denen jeweils eine Bearbeitungseinheit (7 bzw. 14) quer zur Förderbahn (2) verfahrbar ist. Die Bearbeitungseinheiten (6, 7) der ersten Gruppe bearbeiten die vorauslaufenden Ecken (1a) jedes Rahmens (1). Die dahinter angeordneten Bearbeitungseinheiten (13, 14) der zweiten Gruppe bearbeiten die nachlaufenden Ecken (1b) des Rahmens (1).

Fig. 1

EP 0 325 264 A2

## Eckenputzmaschine für Fenster- oder Türrahmen

Die Erfindung betrifft eine Eckenputzmaschine für aus Profilstäben geschweißte Fenster- oder Türrahmen mit Bearbeitungseinrichtungen zum Entfernen der Schweißraupen an den Schweißstellen an den beiden Sichtflächen, an den Innenecken und/oder an den Außenecken der Rahmen.

Eckenputzmaschinen dienen dazu, an den Schweißnähten von Fenster- oder Türrahmen, die aus Kunststoff- oder Metall-Profilstäben stumpfgeschweiß sind, die dabei entstandenen Schweißraupen zu entfernen. Bekannte Eckenputzmaschinen (DE-C-33 29 756, DE-C-30 20 739) bestehen jeweils nur aus einer einzigen Bearbeitungseinheit, die Bearbeitungseinrichtungen zum Entfernen der Schweißraupen an den Schweißstellen an den beiden Sichtflächen, an den Innenecken und/oder an den Außenecken der Rahmen aufweist. Diese Bearbeitungseinrichtungen sind Fräser, Abstechmesser und/oder Schleifwerkzeuge.

Den bekannten, jeweils nur eine Bearbeitungseinheit aufweisenden Eckenputzmaschinen müssen die zu bearbeitenden Ecken des Rahmens zugeführt und in den Arbeitsbereich der Maschine gebracht werden, wobei sie viermal um 90° geschwenkt werden müssen. Während die Bearbeitung jeder Rahmenecke sehr rasch ausgeführt werden kann, verursacht die Handhabung und Zuführung der zu bearbeitenden Rahmen, vor allem wenn es sich um große und sperrige Rahmen handelt, doch einen wesentlichen Arbeits-und Zeitaufwand. Der Platzbedarf in Länge und Breite wird jeweils durch das Diagonalmaß des Rahmens vorgegeben.

Aufgabe der Erfindung ist es, eine Eckenputzmaschine der eingangs genannten Gattung zu schaffen, die eine zeitsparende Bearbeitung von Rahmen unterschiedlicher Größe ermöglicht, wobei insbesondere der Aufwand für die Manipulation des Rahmens möglichst gering ist.

Diese Aufgabe wird erfindungsgemäß dadurch gelöst, daß an einer Förderbahn für die zu bearbeitenden Rahmen mindestens eine Gruppe von Bearbeitungseinheiten angeordnet sind, die quer zur Förderbahn jeweils relativ zueinander verstellbar sind. Dabei kann vorgesehen sein, daß an der Förderbahn zwei Gruppen von Bearbeitungseinheiten angeordnet sind, die quer zur Förderbahn jeweils relativ zueinander verstellbar sind, daß die beiden von Rahmen zuerst erreichten Bearbeitungseinheiten die Bearbeitungseinrichtungen für die in Förderrichtung vorauslaufenden Rahmenecken aufweisen, und daß die beiden folgenden Bearbeitungseinheiten die Bearbeitungseinrichtungen für die in Förderrichtung nachlaufenden Rahmenecken aufweisen.

Stattdessen kann auf vorgesehen sein, daß die beiden vom Rahmen zuerst erreichten Bearbeitungseinheiten die Bearbeitungseinrichtungen für die in Förderrichtung vorauslaufenden Rahmenecken aufweisen, und daß die beiden folgenden Bearbeitungseinheiten die Bearbeitungseinrichtungen für die nachlaufenden Rahmenecken aufweisen.

Die zu bearbeitenden Rahmen können auf der Förderbahn herangefördert werden, bis sich die beiden vorauslaufenden Rahmenecken im Arbeitsbereich der beiden Bearbeitungseinheiten befinden. In dieser Stellung wird der Rahmen angehalten und die Bearbeitung der beiden vorauslaufenden Rahmenecken wird ausgeführt. Danach wird der Rahmen weiterbewegt, bis sich seine beiden nachlaufenden Rahmenecken im Arbeitsbereich der beiden anderen Bearbeitungseinrichtungen bzw. im Arbeitsbereich der inzwischen geschwenkten Bearbeitungseinrichtungen befinden. Dort wird der Rahmen erneut angehalten und bearbeitet, bevor er die Eckenputzmaschine verläßt.

Wenn zwei Gruppen von Bearbeitungseinheiten vorgesehen sind, kann gleichzeitig auf den beiden ersten Bearbeitungseinheiten bereits die Bearbeitung der vorauslaufenden Ecken des nachfolgenden Rahmens erfolgen. Insgesamt ist daher der Zeitaufwand für die vollständige Bearbeitung eines Rahmens nur so groß, wie die für die Bearbeitung eines einzelnen Rahmenecks erforderliche Zeit.

Die Manipulation und der Transport der Rahmen sind sehr einfach durchzuführen, weil die Rahmen nur entlang der Förderbahn bewegt werden, was von Hand oder vorzugsweise durch eine Förder- und Positioniereinrichtung geschehen kann.

Gemäß einer bevorzugten Ausführungsform der Erfindung sind in der Förderbahn Taster, vorzugsweise Lichtschranken angeordnet, die die Position der zu bearbeitenden Rahmen erfassen und die Förder- und Positioniereinrichtung bei Erreichen der jeweiligen Bearbeitungsstellung anhalten. Dadurch wird ein weitestgehend automatisierter Bearbeitungsablauf ermöglicht.

Gemäß einer Ausgestaltung des Erfindungsgedankens ist vorgesehen, daß die beiden Bearbeitungseinheiten jeder Gruppe durch eine gemeinsame, sich quer zur Förderbahn erstreckende Führung miteinander verbunden sind. Vorzugsweise ist eine der beiden Bearbeitungseinheiten feststehend und die andere Bearbeitungseinheit längs der Führung verfahrbar angeordnet. Dadurch wird eine rasche Einstellung auf unterschiedliche Rahmenbreiten ermöglicht. Die Rahmen können nach dem Schweißen auch auf einem Fließband weiter bearbeitet werden. In diesem Fall sind beide Bearbeitungseinheitenpaare getrennt längsverschiebbar angeordnet, so daß sie sich an den Ecken festspannen können und in Fließbandgeschwindigkeit mit dem Rahmen weiterfahren. Nach Beendigung fahren die Bearbeitungseinheitenpaare in ihre Ausgangsposition zurück.

Weitere vorteilhafte Ausgestaltungen des Erfindungsgedankens sind Gegenstand weiterer Unteransprüche.

Nachfolgend werden Ausführungsbeispiele der Erfindung näher erläutert, die in der Zeichnung dargestellt sind. Es zeigt:

Fig. 1 eine Draufsicht auf eine Eckenputzmaschine gemäß einer ersten Ausführungsform,

Fig. 2 eine Ansicht in Richtung des Pfeiles II in Fig. 1,

Fig. 3 eine Draufsicht auf die Eckenputzmaschine entsprechend Fig. 1, wobei unterschiedlich breite Rahmen bearbeitet werden,

Fig. 4 eine Draufsicht auf eine Eckenputzmaschine gemäß einer zweiten Ausführungsform mit nur zwei Bearbeitungseinheiten, die schwenkbar sind, in einer ersten Bearbeitungsstellung,

Fig. 5 eine Ansicht in Richtung des Pfeiles V in Fig. 4,

Fig. 6 eine Draufsicht entsprechend der Fig. 4 in einer zweiten Bearbeitungsstellung und

Fig. 7 eine Ansicht in Richtung des Pfeiles VII in Fig. 6.

Die in der Zeichnung dargestellten Eckenputzmaschinen dienen dazu, an den Ecken von aus Kunststoff- oder Metall-Profilstäben stumpfgeschweißten Fenster- oder Türrahmen 1 die dort entstandenen Schweißraupen zu entfernen. Die zu bearbeitenden Rahmen 1 werden auf einer in der Zeichnung vereinfacht dargestellten Förderbahn 2 in Richtung des Pfeiles 3 herangefördert. Die Förderbahn 2 kann horizontal, schräg oder vertikal angeordnet sein und weist in der in der Zeichnung dargestellten einfachen Ausführungsform mehrere parallele Führungsschienen 4 und an einer Seite des Rahmens 1 eine seitliche Führungsschiene 5 auf. Anstelle der Führungsschienen 4 können auch Förderbänder, Bürstenleisten oder ähnliche die Rahmen 1 in flachliegender Anordnung aufnehmende Einrichtungen vorgesehen sein.

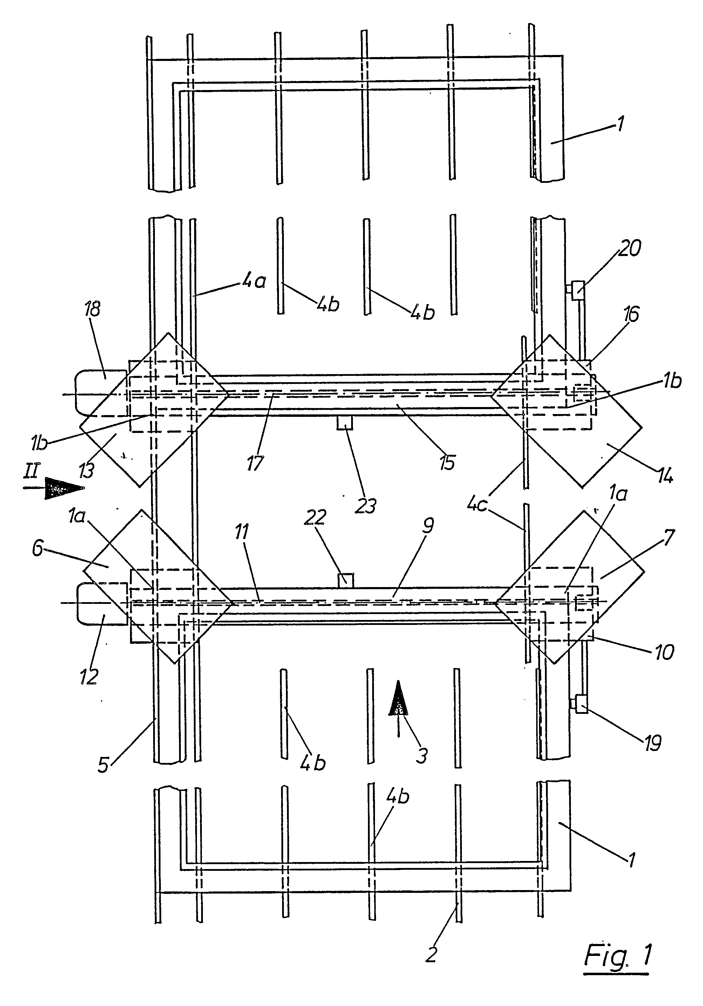

Beim Ausführungsbeispiel nach Fig. 1 - 3 ist im Verlauf der Förderbahn 2 zunächst eine erste Gruppe von zwei Bearbeitungseinheiten 6, 7 angeordnet. Diese Bearbeitungseinheiten 6 bzw. 7 entsprechen in ihrem Aufbau im wesentlichen den bekannten Bearbeitungseinheiten (DE-A- 30 20 739, DE-A-33 29 756), die bisher für die Einzelbearbeitung der Ecken von Fenster- oder Türrahmen als feststehende Einheiten verwendet werden.

Jede dieser Bearbeitungseinheiten 6, 7 weist beispielsweise (nicht dargestellt) Abstechmesser oder Fräser für die obere und die untere Sichtfläche des Rahmens 1 auf, sowie mindestens einen Fräser für die Bearbeitung des Außenecks und - soweit erforderlich -Fräser oder Abstechmesser für die Bearbeitung des Innenecks. Da solche Bearbeitungseinheiten bekannt sind, werden sie hier nicht näher beschrieben.

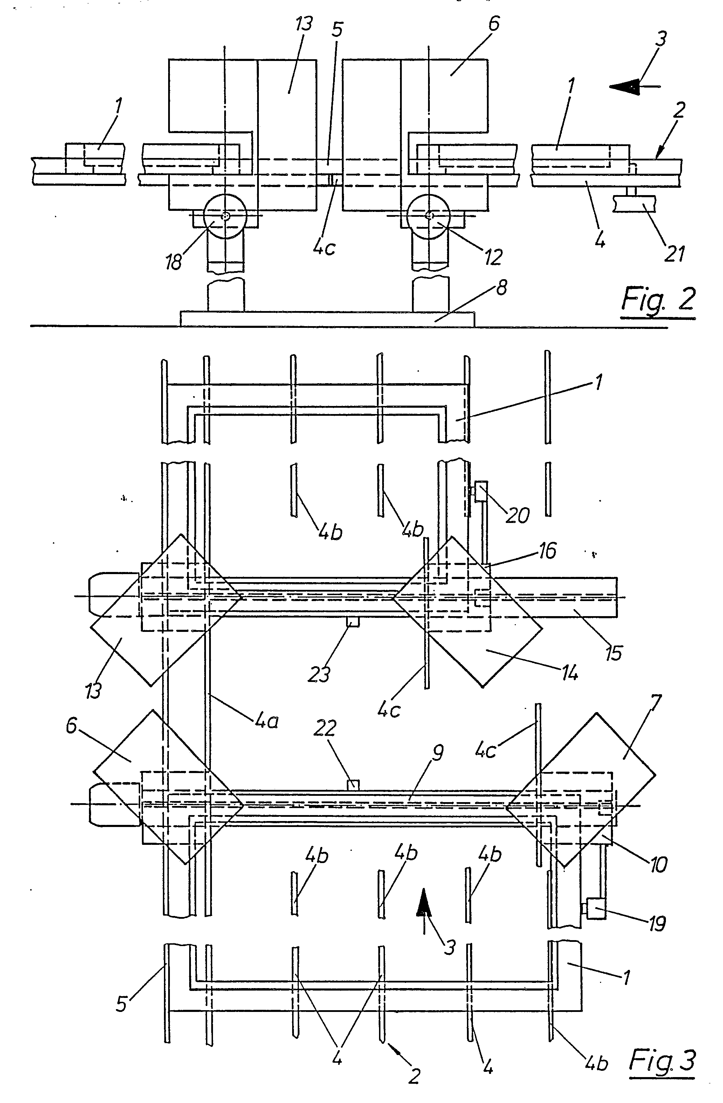

Die eine Bearbeitungseinheit 6 ist feststehend angeordnet und mit einem Maschinengestell 8 (Fig. 2) verbunden, mit dem auch die Förderbahn 2 verbunden ist. Die zweite Bearbeitungseinheit 7 ist entlang einer Führung 9 verfahrbar, die einen Teil des Maschinengestells 8 bildet und sich quer zur Förderbahn 2 erstreckt. Bei dem in den Fig. 1 - 3 dargestellten Ausführungsbeispiel wird die verfahrbare Bearbeitungseinheit 7 von einem entlang der Führung 9 verfahrbaren Schlitten 10 getragen. Die Verstellung des Schlittens 10 erfolgt durch eine Gewindespindel 11, eine Kette oder einen Riemen, die von einem gestellfest angeordneten Verstellmotor 12 angetrieben wird und mit einer im Schlitten 10 angeordneten Gewindemutter in Eingriff steht.

Unmittelbar im Anschluß and die Gruppe der Bearbeitungseinheiten 6 und 7, die vom Rahmen 1 zuerst erreicht werden, ist eine zweite Gruppe von Bearbeitungseinheiten 13, 14 im Maschinengestell 8 angeordnet. Auch hierbei ist die eine Bearbeitungseinheit 13 feststehend, während die andere Bearbeitungseinheit 14 relativ dazu entlang einer Führung 15 verfahrbar ist, die sich quer zur Förderbahn 2 erstreckt. Auch die Bearbeitungseinheit 14 wird von einem Schlitten 16 getragen, der durch eine Gewindespindel 17, eine Kette oder einen Riemen verfahrbar ist, die von einem Verstellmotor 18 angetrieben wird.

Die beiden verfahrbaren Bearbeitungseinheiten 7 und 14 bzw. der diese Bearbeitungseinheit 7 bzw. 14 tragende Schlitten 10 bzw. 16 sind jeweils mit einem Taster 19 bzw. 20 verbunden. Die Taster 19, 20 sind so angeordnet, daß sie die der seitlichen Führungsschiene 5 gegenüberliegende Außenfläche des Rahmens 1 erfassen. Es kann sich hierbei um mechanische, optische oder sonstige Taster oder auch einfache Anschläge handeln.

Wenn ein zu bearbeitender Fenster- oder Türrahmen 1 auf der Förderbahn 2 in Richtung des Pfeiles 3 zugeführt wird, beispielsweise durch eine in Fig 2 nur angedeutete Förder- und Positioniereinrichtung 21, die als antreibbare Förderkette ausgeführt sein kann, wird der Rahmen 1 so weit gefördert, bis sich seine vorauslaufenden Ecken 1a im Arbeitsbereich der beiden ersten Bearbeitungseinheiten 6 und 7 befinden. Diese Bearbeitungsstellung kann beispielsweise durch eine in der Förderbahn 2 angeordnete Lichtschranke 22 festgelegt sein, die die vorauslaufende Kante des Rahmens 1 erfaßt und die Förder- und Positioniereinrichtung 21 anhält. In dieser Stellung werden die Rahmenecken 1a in den Bearbeitungseinheiten 6 und 7 gespannt, wobei auch eine Zentrierung erfolgen kann, und werden bearbeitet. Die Zentrierung erfolgt zweckmäßigerweise dadurch, daß die Bearbeitungseinheiten bzw. die Bearbeitungseinrichtungen federnd angeordnet sind und sich am Rahmen 1 zentrieren. Wie man aus den Fig. 1 und 3 erkennt, sind die Bearbeitungseinheiten 6 und 7 unter 45° zur Längsrichtung der Förderbahn 2 ausgerichtet, so daß die Bearbeitung in Richtung der Schweißnähte an den Ecken 1a erfolgt.

Nachdem die Bearbeitung der Ecken 1a ausgeführt ist, wird der Rahmen auf der Förderbahn 2 so weit gefördert, bis sich seine nachlaufenden Ecken 1b im Arbeitsbereich der beiden nächsten Bearbeitungseinheiten 13 und 14 befindet. Diese Bearbeitungsstellung wird durch eine Lichtschranke 23 festgelegt, die die nachlaufende Kante des Rahmens 1 erfaßt. Die Bearbeitung der Ecken 1b erfolgt in den Bearbeitungseinheiten 13 und 14 in gleicher Weise wie schon beschrieben, nachdem die Förder- und Positioniereinrichtung 21 durch die Lichtschranke 23 gesteuert angehalten wurde.

Währenddessen wurde ein weiterer Rahmen 1 den beiden ersten Bearbeitungseinheiten 6 und 7 zugeführt. Die Bearbeitung der vorauslaufenden Ecken 1a dieses zweiten Rahmens auf den Bearbeitungseinheiten 6 und 7 erfolgt gleichzeitig mit der Bearbeitung der nachlaufenden Ecken 1b des vorhergehenden Rahmens 1 auf den Bearbeitungseinheiten 13 und 14.

Die Bearbeitungseinheiten 7 und 14 fahren nach der Bearbeitung in die äußere Stellung. Kommt der folgende Rahmen 1 in den Bereich der Schalter oder Taster 19 und 20, so werden die Bearbeitungseinheiten 7 und 14 nach innen auf die entsprechenden Rahmen 1 verfahren.

Bei ihrer Bewegung entlang der Förderbahn 2 liegen die Rahmen 1 mit ihrer einen Seite an der seitlichen Führungsschiene 5 an und sind seitlich somit zu den beiden feststehenden Bearbeitungseinheiten 6 und 13 ausgerichtet. Die beiden verfahrbaren Bearbeitungseinheiten 7 und 14 werden entlang der Führungen 9 bzw. 15 so weit auf die Bearbeitungseinheiten 6 und 13 hin verfahren, bis die Taster 19 bzw. 20 die andere Rahmenseite erfaßt haben. Dann sind die verfahrbaren Bearbeitungseinheiten 7 bzw. 14 auf die jeweilige Rahmenbreite eingestellt. In Fig. 3 ist gezeigt, daß auf diese Weise nacheinander unterschiedlich breite Rahmen 1 bearbeitet werden können.

Von den die Rahmen 1 tragenden Führungsschienen 4 ist im Bereich der Bearbeitungseinheiten 6, 7, 13, 14 nur die der seitlichen Führungsschiene 5 benachbarte Führungsschiene 4a durchgehend ausgeführt. Die übrigen Führungsschienen 4b sind im Bereich der Bearbeitungseinheiten unterbrochen, um eine seitliche Verstellung der verfahrbaren Bearbeitungseinheiten 7, 14 ungehindert zu ermöglichen.

Die Abstützung der Rahmen 1 erfolgt im Bearbeitungsbereich durch Führungsschienenstücke 4c, die an den Schlitten 10 bzw. 16 angebracht und mit diesen verfahrbar sind.

Bei der Fließbandanordnung fahren die Bearbeitungseinheiten 7 und 14 nach innen bis auf Rahmenbreite, sobald sich die Rahmen 1 im Bereich der Taster 19 und 20 befinden.

Wenn die Rahmen 1 die Lichtschranken 22 bzw. 23 passieren, werden die Bearbeitungseinheiten 6,7,13,14 an der Rahmenecke festgespannt und fahren in Fließbandgeschwindigkeit mit dem Rahmen mit. Sobald die Bearbeitung beendet ist, wird die Spannung gelöst, und die Bearbeitungseinheiten fahren nach rückwärts in die Ausgangsstellung.

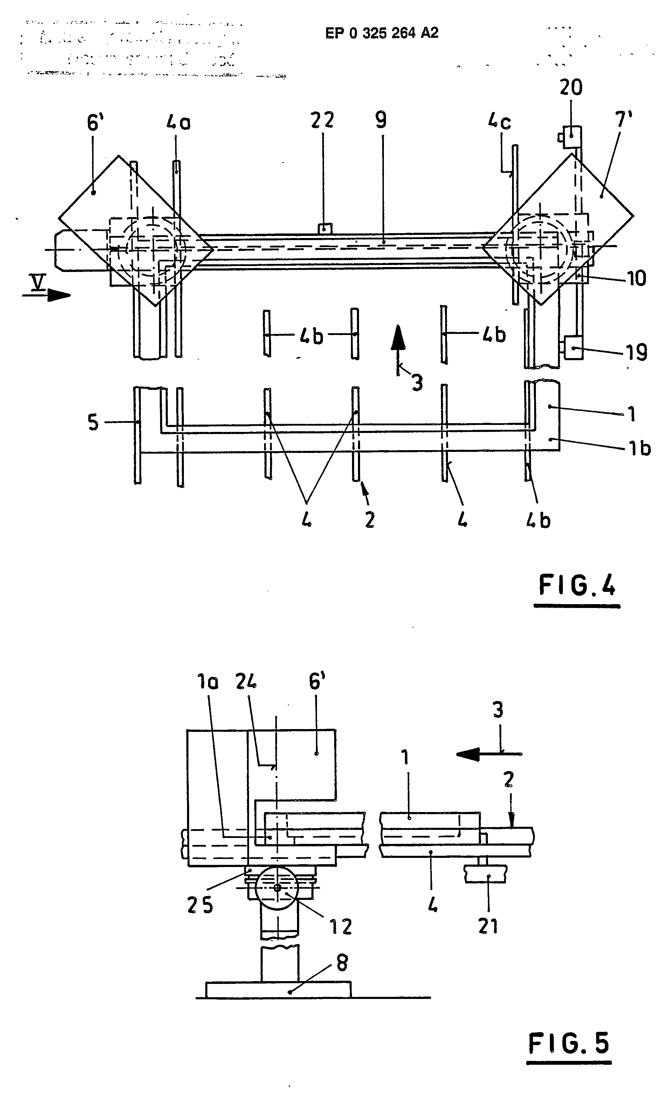

Das in den Fig. 4 bis 7 dargestellte zweite Ausführungsbeispiel, bei dem für gleiche Teile gleiche Bezugszeichen wie vorher verwendet werden, unterscheidet sich von dem bisher beschriebenen Ausführungsbeispiel im wesentlichen dadurch, daß an der Förderbahn 2 nur eine Gruppe von zwei Bearbeitungseinheiten 6' und 7' angeordnet ist, die quer zu der Förderbahn 2 relativ zueinander verstellbar sind. Die beiden Bearbeitungseinheiten 6' und 7' sind jeweils um eine senkrechte Achse 24 schwenkbar. Hierzu ist jede der Bearbeitungseinheiten 6', 7' auf einem Drehtisch 25 aufgenommen, der mittels eines (nicht dargestellten) Drehantriebs zwischen einer Bearbeitungsstellung für die in Förderrichtung vorauslaufenden Rahmenecken 1a (Fig. 4 und 5) und einer Bearbeitungsstellung für die in Förderrichtung nachlaufenden Rahmenecken 1b schwenkbar ist. Da die Ausrichtung der Bearbeitungseinheiten 6' bzw. 7' in der Bearbeitungsstellung jeweils in Richtung der unter 45° verlaufenden Schweißraupen an den Rahmenecken 1a und 1b erfolgt, werden die Bearbeitungseinheiten 6', 7' jeweils um 90° um die Achse 24 geschwenkt.

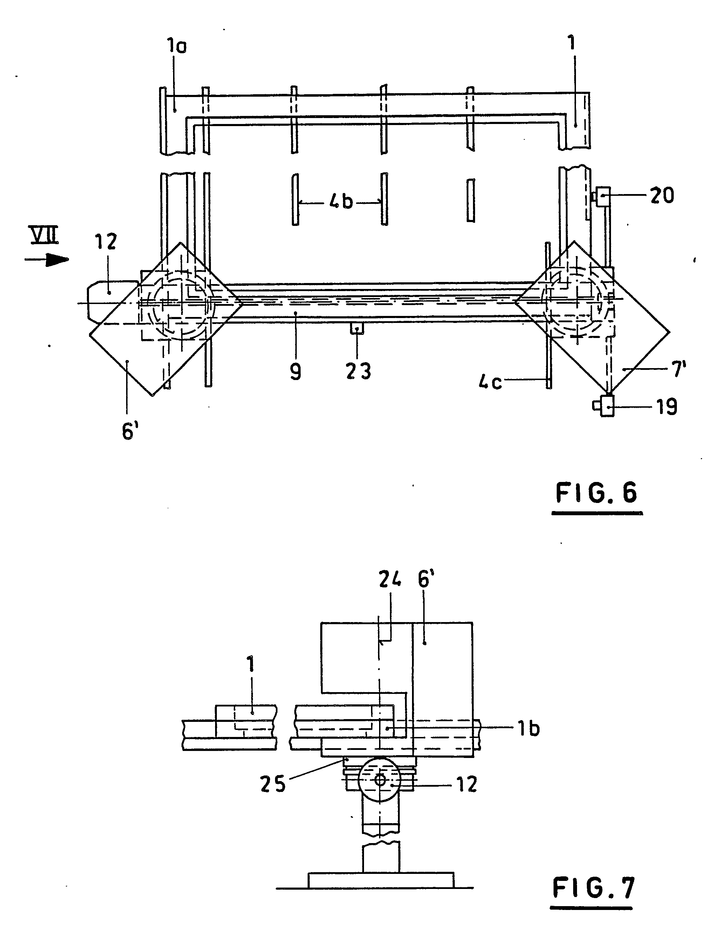

Die Fig. 4 und 5 zeigen die Stellung, in der die vorauslaufenden Rahmenecken 1a die Bearbeitungseinheiten 6' und 7' erreicht haben. Diese Stellung wird von der Lichtschranke 22 erfaßt und der Steuerung mitgeteilt. Dort wird zugleich kontrolliert, ob sich die Bearbeitungseinheiten 6' und 7' in der für die Bearbeitung der vorauslaufenden Rahmenecken 1a richtigen Stellung befinden. Nach dem Spannen des Rahmens 1 erfolgt die Bearbeitung der Rahmenecken 1a. Danach wird die Spannung gelöst und der Rahmen 1 wird in Förderrichtung 3 bis in die in den Fig. 6 und 7 gezeigte Stellung gefördert, in der sich die nachlaufenden Rahmenecken 1b in der Bearbeitungsstellung an den Bearbeitungseinheiten 6' und 7' befinden. Diese Bearbeitungseinheiten 6' und 7' wurden inzwischen in die entsprechende Bearbeitungsstellung geschwenkt. Sobald die Lichtschranke 23 feststellt, daß der Rahmen 1 die Bearbeitungsstellung erreicht hat, wird er wieder gespannt; dann erfolgt die Bearbeitung der nachlaufenden Ecken 1b. Diese Vorgänge wiederholen sich beim Durchlauf jedes Rahmens.

Wie schon am Beispiel nach den Fig. 1 bis 3 erläutert, kann auch bei dem Ausführungsbeispiel nach den Fig. 1 bis 7 die eine Bearbeitungseinheit 7' längs einer Führung 9 verfahren werden, um eine automatische Einstellung auf unterschiedlich breite Rahmen 1 zu ermöglichen. Die Rahmen 1 werden hierbei in der schon beschriebenen Weise durch die Taster 19 bzw. 20 erfaßt, die auch eine Profilerkennung durchführen können.

**Ansprüche**

1. Eckenputzmaschine für aus Profilstäben geschweißte Fenster- oder Türrahmen (1) mit Bearbeitungseinrichtungen zum Entfernen der Schweißraupen an den Schweißstellen an den beiden Sichtflächen, an den Innenecken und/oder an den Außenecken der Rahmen (1), dadurch gekennzeichnet, daß an einer Förderbahn (2) für die zu bearbeitenden Rahmen (1) mindestens eine Gruppe von Bearbeitungseinheiten (6,7 bzw. 13, 14; 6', 7') angeordnet sind, die quer zur Förderbahn (2) jeweils relativ zueinander verstellbar sind.

2. Eckenputzmaschine nach Anspruch 1, dadurch gekennzeichnet, daß an der Förderbahn (2) zwei Gruppen von Bearbeitungseinheiten (6,7 bzw. 13, 14) angeordnet sind, die quer zur Förderbahn (2) jeweils relativ zueinander verstellbar sind, daß die beiden vom Rahmen (1) zuerst erreichten Bearbeitungseinheiten (6, 7) die Bearbeitungseinrichtungen für die in Förderrichtung vorauslaufenden Rahmenecken (1a) aufweisen, und daß die beiden folgenden Bearbeitungseinheiten (13, 14) die Bearbeitungseinrichtungen für die nachlaufenden Rahmenecken (1b) aufweisen.

3. Eckenputzmaschine nach Anspruch 1, dadurch gekennzeichnet, daß an der Förderbahn (2) nur eine Gruppe von zwei Bearbeitungseinheiten (6', 7') angeordnet ist, die quer zur Förderbahn (2) relativ zueinander verstellbar sind, und daß die Bearbeitungseinheiten (6', 7') jeweils um eine senkrechte Achse zwischen einer Stellung für die Bearbeitung der in Förderrichtung vorauslaufenden Rahmenecken (1a) und einer Stellung für die Bearbeitung der in Förderrichtung nachlaufenden Rahmenecken (1b) schwenkbar sind.

4. Eckenputzmaschine nach Anspruch 1, dadurch gekennzeichnet, daß die beiden Bearbeitungseinheiten (6, 7 bzw. 13, 14; 6', 7') jeder Gruppe durch eine gemeinsame, sich quer zur Förderbahn (2) erstreckende Führung (9 bzw. 15) miteinander verbunden sind.

5. Eckenputzmaschine nach Anspruch 4, dadurch gekennzeichnet, daß eine der beiden Bearbeitungseinheiten (6 bzw. 13; 6') jeder Gruppe feststehend und die andere Bearbeitungseinheit (7 bzw. 14; 7') längs der Führung (9 bzw. 15) verfahrbar angeordnet ist.

6. Eckenputzmaschine nach Anspruch 5, dadurch gekennzeichnet daß die verfahrbare Bearbeitungseinheit (7 bzw. 14; 7') auf einem längs der Führung (9 bzw. 15) verfahrbaren Schlitten (10 bzw. 16) angeordnet ist.

7. Eckenputzmaschine nach Anspruch 5, dadurch gekennzeichnet, daß die Förderbahn (2) eine feststehende seitliche Führungsschiene (5) für den Rahmen (1) aufweist.

8. Eckenputzmaschine nach Anspruch 5 oder 6, dadurch gekennzeichnet, daß die verfahrbare Bearbeitungseinheit (7 bzw. 14; 7') oder der Schlitten (10 bzw. 16) mit einem die Außenseite des Rahmens (1) erfassenden Taster (19 bzw. 20) oder Anschlag verbunden ist.

9. Eckenputzmaschine nach Anspruch 1, dadurch gekennzeichnet, daß die Förderbahn (2) eine Förder- und Positioniereinrichtung (21) für den Rahmen (1) aufweist.

10. Eckenputzmaschine nach Anspruch 9, dadurch gekennzeichnet, daß in der Förderbahn (2) Taster, vorzugsweise Lichtschranken (22, 23) angeordnet sind, die die Position der zu bearbeitenden Rahmen (1) erfassen und die Förder- und Positioniereinrichtung (21) bei Erreichen der Bearbeitungsstellung anhalten.

11. Eckenputzmaschine nach Anspruch 1, dadurch gekennzeichnet, daß die Förderbahn (2) ein Fließband ist und daß die Bearbeitungseinheiten (6, 7, 6', 7', 13, 14) nach dem Festspannen an den zur bearbeitenden Rahmen (1) mit Fließbandgeschwindigkeit in Förderrichtung verfahrbar sind.

12. Eckenputzmaschine nach Anspruch 1, dadurch gekennzeichnet, daß die Förderbahn (2) horizontal, schräg oder vertikal verläuft.

*Fig. 1*

*Fig. 2*

*Fig. 3*

FIG.4

FIG.5

FIG. 6

FIG. 7